# EUROPÄISCHE PATENTSCHRIFT

(11) **EP 2 788 158 B1**
(45) Veröffentlichungstag und Bekanntmachung des Hinweises auf die Patenterteilung: **01.08.2018**
(21) Anmeldenummer: 12806368.2
(22) Anmeldetag: 30.11.2012
(51) Int. Cl.: B26D 7/18, B26F 1/44

(54) **VERFAHREN UND VORRICHTUNG ZUM HERSTELLEN EINES AUSBRECHWERKZEUGES**
METHOD AND APPARATUS FOR MAKING A STRIPPING TOOL
PROCÉDÉ ET MÉTHODE POUR LA MANUFACTURE D'UN OUTIL DE SÉPARATION DE POSES

(30) Priorität: 05.12.2011 DE 102011056061; 06.12.2011 DE 102011056091; 29.02.2012 DE 102012101660; 03.05.2012 DE 102012103858
(43) Veröffentlichungstag der Anmeldung: 15.10.2014
(73) Patentinhaber: BOXPLAN GmbH & Co.KG, 78315 Radolfzell (DE)
(72) Erfinder: JAKOB, Joachim, 78315 Radolfzell (DE)
(74) Vertreter: Patentanwälte und Rechtsanwalt Weiß, Arat & Partner mbB
(86) Internationale Anmeldenummer: PCT/EP2012/074012
(87) Internationale Veröffentlichungsnummer: WO 2013/083477

(56) Entgegenhaltungen:
- DE-A1- 4 103 339
- DE-U1- 29 707 792
- US-A- 5 049 122
- US-A- 5 291 652

## Beschreibung

### TECHNISCHES GEBIET

Die Erfindung betrifft ein Verfahren zum Herstellen eines Ausbrechwerkzeuges nach den Merkmalen des Oberbegriffs des Anspruchs 1.

### STAND DER TECHNIK

In diesem Zusammenhang wird auf die US 5,049,122 hingewiesen, welche eine rotierende Vorrichtung beschreibt, welche die Verwendung eines Roboters zur automatischen Einbringung von Ausbrechstiften in eine Platte beschreibt. Weiter wird auf die DE 297 07 792 U1 verwiesen, welche eine Ausbrechvorrichtung für die Herstellung von Zuschnitten aus einem Bogen beschreibt, bei der eine Mehrzahl von Ausbrechstiften in Reihe angeordnet werden, um eine Vielzahl von Bögen gleichzeitig zu bearbeiten. Der Bestückungsautomat der Lochplatte greift auf CAD Umrissdaten der Nutzen eines Bogens zu. Daneben wird auf die US 5,291,652 hingewiesen, welche eine Vorrichtung aufzeigt, bei der eine Einbringeinrichtung beispielsweise aus einem Magazin die Ausbrechstifte mittels eines SCARA-Typ Roboters auf eine entsprechende Ausbrechplatte aufbringt. Weiter wird auf die DE 41 03 339 A1 hingewiesen, welche Ausbrechstifte mit einer zentrierspitze offenbart zur besseren Einbringung in ein Ausbrechwerkzeug. Zum Stanzen und Ausbrechen werde als Ausbrechwerkzeug meist Ausbrechplatten verwendet, in die Ausbrechstifte oder Ausbrechflachstreifen eingesetzt werden. Ein Beispiel für einen Ausbrechstift ist der Kronenstift (crown' pin) der Firma Boxplan. Der Ausbrechstift weist einen kreisförmigen Querschnitt auf.

Ein Beispiel für einen Ausbrechflachstreifen ist eine Ausbrechkralle. Diese weist an ihrer Vorderseite eine Linie mit zwei Spitzen auf. Üblicherweise können Ausbrechflachstreifen aufgrund ihres geringen streifenförmigem Querschnitts nur manuell in eine Ausbrechplatte eingesetzt werden. Dazu wird in die Ausbrechplatte eine Öffnung eingebracht, die im Wesentlichen einem Querschnitt des Ausbrechflachstreifen entspricht. Meist werden diese Schlitze gelasert.

Das Einbringen der Ausbrechstifte ist grundsätzlich maschinell möglich, da diese relativ stabil sind. Dazu weisen solche Stifte an einem Ende, das in die Ausbrechplatte eingebracht wird, eine konische Verjüngung auf. Zusätzlich weisen diese Stifte an ihrer Oberseite meist eine Ausnehmung auf. Die Ausbrechstifte werden direkt mit dem Ende, an dem die chronische Verjüngung angeordnet ist, in das Material der Ausbrechplatte eingetrieben. Dieses verformt sich dann. Ein Teil des Materials wird in der Ausnehmung der Oberseite des Ausbrechstiftes aufgenommen.

Alternativ es gibt auch den Fall, dass die Stifte in ein vorgebohrtes und/oder gelasertes und/oder geschnittenes Loch maschinell gesetzt werden. Diese Vorgehensweise ist zwar selten und kostspieliger, aber auch möglich.

Nachteiligerweise müssen Ausbrechwerkzeuge, bei denen Ausbrechstifte und Ausbrechflachstreifen vorgesehen sind, sehr aufwändig hergestellt werden. In einem ersten Schritt werden die Schlitze für die Ausbrechflachstreifen vorgeschnitten. Dann werden die Ausbrechstifte manuell in die Ausbrechplatte eingetrieben. Anschließend werden die Ausbrechflachstreifen von Hand in die Schlitze der Ausbrechplatte eingesetzt.

### AUFGABE DER ERFINDUNG

Aufgabe der Erfindung ist es, eine Vorrichtung zum Herstellen eines Ausbrechwerkzeuges bereitzustellen, mit dem auf einfache Art und Weise Ausbrechstifte und Ausbrechflachstreifen in eine Ausbrechplatte eingesetzt werden können. Des weiteren soll auch ein Verfahren hierzu angegeben werden.

### Lösung

Zur Lösung der Aufgabe führen die Merkmale der Ansprüche 1 und 2. Erfindungsgemäss umfasst eine Vorrichtung zum Herstellen eines Ausbrechwerkzeugs eine Steuereinheit, eine Aufnahme für eine Ausbrechplatte, eine Ausbrechflachstreifeneinbringeinrichtung und eine Ausbrechstifteinbringeinrichtung. Dadurch ergibt sich der Vorteil, dass auf einfache Art und Weise in einem Arbeitsschritt Ausbrechflachstreifen mit einem streifenförmigen Querschnitt und Ausbrechstifte mit einem kreisförmigen Querschnitt in eine Ausbrechplatte eingebracht werden können. Unabhängig davon, sollen vom Erfindungsgedanken aber auch umfasst sein, dass eine Vorrichtung zum alleinigen automatisierten Einbringen von Ausbrechflachstreifen zur Verfügung gestellt wird. Es soll daneben aber auch gerade die Kombination geschützt werden, dass neben der alleinigen automatisierten Einbringung von Ausbrechflachstreifen auch die kombinierte automatisierte Einbringung von Ausbrechflachstreifen und Ausbrechstiften vom Erfindungsgedanken umfasst sein.

Vorzugsweise weist der Ausbrechstift einen Querschnitt mit einem Durchmesser von 1 mm bis 10 mm, vorzugsweise zwischen 1, 8 mm und 5 mm auf. Dadurch lassen sich die besten Ausbrechergebnisse erzielen.

Bevorzugt weist ein Ausbrechflachstreifen ein rechteckigen Querschnitt auf. Bevorzugt weist der Querschnitt des Ausbrechflachstreifen eine Dicke von 0,1 mm bis 3 mm auf. Bevorzugt weist der Querschnitt des Ausbrechflachstreifens eine Länge von 2 mm bis 30 mm auf. Zweckmäßigerweise kann der Querschnitt des Ausbrechflachstreifen einen Knick aufweisen.

In typischen Ausführungsbeispielen ist die Ausbrechflachstreifeneinbringeinrichtung geeignet, einen Ausbrechflachstreifen in einen bereits in die Ausbrechplatte eingebrachten Schlitz einzusetzen. Vorzugsweiseweise weist der Schlitz Masse auf, die dem Querschnitt des Ausbrechflachstreifens entsprechen. Dadurch ergibt sich der Vorteil, dass der Ausbrechflachstreifen mit einer Presspassung in dem Schlitz gehalten wird.

In typischen Ausführungsbeispielen ist die Ausbrechflachstreifeneinbringeinrichtung geeignet, einen Ausbrechflachstreifen aus einem Magazin zu entnehmen. Dadurch ergibt sich der Vorteil, dass der Ausbrechflachstreifen automatisch aufgenommen werden kann.

In typischen Ausführungsbeispielen weist die Vorrichtung eine Detektionseinrichtung auf. Bevorzugt ist die Detektionseinrichtung geeignet, die Schlitze in der Ausbrechplatte zu erkennen.

Bevorzugt ist mit dem Begriff Erkennen gemeint, dass die Steuereinheit die Position aus einem CAD-Programm erhält, in welchem zuvor alle Positionen und Arten von Stiften und Metallstreifen in Sorte und Position festlegt wurden.

Dadurch ergibt sich der Vorteil, dass die Ausbrechflachstreifen automatisiert eingesetzt werden können, da die Schlitze zur Aufnahme der Ausbrechflachstreifen automatisch erkannt werden.

In typischen Ausführungsbeispielen ist die Ausbrechstifteinbringeinrichtung geeignet, einen Ausbrechstift in die Ausbrechplatte einzutreiben. Vorzugsweise wird der Ausbrechstift direkt in das Material bzw. in die Oberfläche der Ausbrechplatte eingetrieben Dies bedeutet, dass die Ausbrechstifte die Ausbrechplatte nicht vollständig durchdringen, sondern lediglich bis zu beispielsweise 2 mm in die Oberfläche der Ausbrechplatte eindringen. Bevorzugt besteht die Ausbrechplatte aus Holz. Es sind jedoch weitere Materialien denkbar und sollen von der vorliegenden Erfindung umfasst sein.

In typischen Ausführungsbeispielen ist die Ausbrechstifteinbringeinrichtung geeignet, einen Ausbrechstift aus einem Magazin zu entnehmen. Dadurch ergibt sich der Vorteil, dass der Ausbrechstift automatisiert aufgenommen werden kann.

In typischen Ausführungsbeispielen ist die Steuereinheit geeignet, die Ausbrechstifteinbringeinrichtung so anzusteuern, dass die Ausbrechstifte nach einem vorgegebenen Plan oder Muster aus dem Magazin entnommen und in die Ausbrechplatte eingesetzt werden können.

In typischen Ausführungsbeispielen ist die Steuereinheit geeignet, die Aufnahme mit der Ausbrechplatte so zu der Ausbrechstifteinbringeinrichtung zu verschieben, dass die Ausbrechstifte nach einem vorgegebenen Plan oder Muster gesetzt werden können.

In typischen Ausführungsbeispielen des Verfahrens werden die Ausbrechflachstreifen in bereits vorhandene Schlitze in der Ausbrechplatte gesteckt. Dadurch ergibt sich der Vorteil, dass die Ausbrechflachstreifen beim Einbringen nicht verformt werden, da keine große Kraft auf die Ausbrechflachstreifen ausgeübt werden muss.

In typischen Ausführungsbeispielen werden die Ausbrechstifte direkt in das Material der Ausbrechplatte eingetrieben Dadurch ergibt sich der Vorteil, dass der Arbeitsschritt "Ausnehmung für Ausbrechstifte herstellen", wie er vor dieser Erfindung notwendig war, entfällt. Dies ist möglich, weil die Ausbrechstifte einen größeren Durchmesser als die Ausbrechflachstreifen aufweisen und so beim Eintreiben nicht verformt werden.

### KURZE BESCHREIBUNG DER FIGUREN

Nachfolgend wird die Erfindung anhand der beiliegenden Zeichnung kurz beschrieben, wobei die einzige Figur eine schematische Darstellung einer erfindungsgemässen Vorrichtung zum Herstellen eines Ausbrechwerkzeugs zeigt.

### AUSFÜHRUNGSBEISPIEL

Figur 1 zeigt eine erfindungsgemäße Vorrichtung 1 zum Herstellen eines Ausbrechwerkzeugs;
Figuren 2 und 3 verschiedene Ausführungsbeispiele für Ausbrechflachstreifen;
Figur 4 eine Seitenansicht eines Ausführungsbeispiel für einen Ausbrechstift;
Figur 5 eine Seitenansicht eines weiteren Ausführungsbeispiels eines Ausbrechflachstreifens;
Figur 6 eine Draufsicht auf den Ausbrechflachstreifen nach Figur 5;
Figur 7 eine Seitenansicht eines weiteren Ausführungsbeispiels eines Ausbrechflachstreifens;
Figur 8 eine Draufsicht auf den Ausbrechflachstreifen nach Figur 7;

Die Vorrichtung 1 umfasst eine Steuereinheit 2 und eine Aufnahme 3 für eine Ausbrechplatte 4. Das hier gezeigte Ausführungsbeispiel zeigt eine kombinierte automatisierte Einbringung von Ausbrechflachstreifen und Ausbrechstiften. Daneben wird gesondert Schutz begehrt für ein nicht gezeigtes Ausführungsbeispiel, dass geeignet ist Ausbrechflachstreifen in eine Ausbrechplatte zu einzubringen. Der gleiche Effekt entsteht auch, wenn bei der hier gezeigten Ausführung lediglich die Ausbrechflachstreifen setzende Einrichtung genutzt werden würde.

Des weiteren umfasst die Vorrichtung 1 eine Ausbrechflachstreifeneinbringeinrichtung 5 und eine Ausbrechstifteinbringeinrichtung 6.

Die Ausbrechstifteinbringeinrichtung 6 ist mit der Steuereinheit 2 verbunden. Diese Verbindung ist als gestrichelte Linie 7 dargestellt.

Analog ist die Ausbrechflachstreifeneinbringeinrichtung 5 mit der Steuereinheit 2 verbunden. Diese Verbindung ist als gestrichelte Linie 8 dargestellt.

Die Steuereinheit 2 ist weiterhin auf nicht näher gezeigte Art und Weise mit der Aufnahme 3 beziehungsweise einer nicht näher dargestellten Verfahreinrichtung der Aufnahme 3 verbunden.

Die Funktionsweise der Erfindung ist folgende:
Zur Herstellung eines Ausbrechwerkzeugs wird die Ausbrechplatte 4 auf die Aufnahme 3 gelegt. Vorzugsweise sind in die Ausbrechplatte 4 an den Stellen, in die ein Ausbrechflachstreifen 9 eingesetzt werden soll, Schlitze 10 in eine Oberfläche 14 der Ausbrechplatte 4 eingebracht.

Mit einer nicht dargestellten Detektionseinrichtung wird der Steuereinheit 2 die Position des Schlitzes 10 übermittelt. Alternativ kann die Steuereinheit 2 die Positionen des Schlitzes wie auch die Art und Länge der einzusetzenden Elemente auch aus einem Programm und/oder Modell, insbesondere CAD-Programm und/oder CAD-Modell auslesen.

Mit der Ausbrechflachstreifeneinbringeinrichtung 5 wird der Ausbrechflachstreifen 9 in den Schlitz 10 gesetzt.

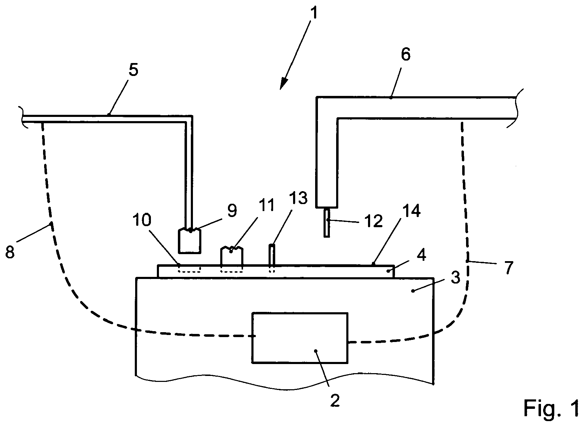

Dieser Vorgang kann so oft wiederholt werden, wie es der Aufbau des fertigen Ausbrechwerkzeuges erfordert. Das Ausführungsbeispiel der Figur 1 zeigt einen bereits eingesetzten Ausbrechflachstreifen 11 in der Ausbrechplatte 4.

Weitere Ausbrechflachstreifen können mit der Ausbrechflachstreifeneinbringeinrichtung 5 aus einem nicht dargestellten Magazin entnommen werden.

Zum Positionieren des Ausbrechflachstreifens 11 gegenüber der Ausbrechplatte 4 beziehungsweise dem Schlitz 10 wird bevorzugt die Ausbrechflachstreifeneinbringeinrichtung 5 bewegt. Gegebenenfalls kann auch die Aufnahme 3 beziehungsweise die Ausbrechplatte 4 gegenüber der Ausbrechflachstreifeneinbringeinrichtung 5 bewegt werden.

Wenn alle Ausbrechflachstreifen gesetzt sind, wird begonnen mit der Ausbrechstifteinbringeinrichtung 3 ein Ausbrechstift 12 in die Ausbrechplatte 4 einzubringen. Dazu sind vorzugsweise keine Öffnungen in der Ausbrechplatte 4 vorhanden.

In weiteren nicht dargestellten Ausführungsbeispielen werden die Ausbrechstifte in vorgeschnittene Öffnungen eingesetzt. Diese Verfahren ist zwar etwas teurer, jedoch schonender für den Ausbrechstift.

Der Ausbrechstift 12 wird direkt in die Ausbrechplatte 4 beziehungsweise das Material der Ausbrechplatte 4 eingetrieben. Allerdings durchdringt der Ausbrechstift 12 die Ausbrechplatte 4 nicht.

Zum Positionieren des Ausbrechstiftes 12 gegenüber der Ausbrechplatte 4 wird bevorzugt die Ausbrechstifteinbringeinrichtung 6 gegenüber der Aufnahme 3 beziehungsweise der Ausbrechplatte 4 verfahren. Alternativ kann auch die Aufnahme 3 beziehungsweise die Ausbrechplatte 4 gegenüber der Ausbrechstifteinbringeinrichtung 6 verfahren werden. Die Steuerung dieser Relativbewegung erfolgt über die Steuereinheit 2.

Dieser Vorgang kann so oft wiederholt werden, wie es der Aufbau des fertigen Ausbrechwerkzeuges erfordert.

Weitere Ausbrechstifte können mit der Ausbrechstifteinbringeinrichtung 6 aus einem nicht dargestellten Magazin entnommen werden. Figur 1 zeigt das Ausführungsbeispiel mit einem bereits eingesetzten Ausbrechstift 13.

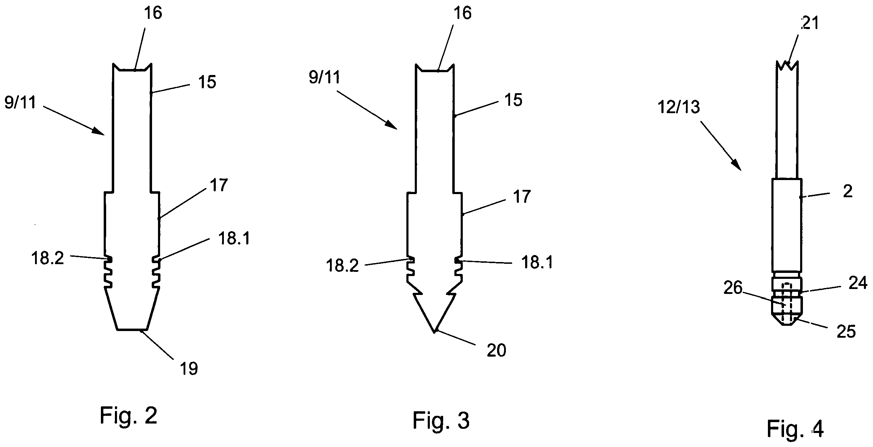

In der Figur 2 ist ein Ausbrechflachstreifen 9/11 gezeigt. Dieser Ausbrechflachstreifen weist eine Ausbrechspitze 15 auf, welche in diesem Ausführungsbeispiel über eine Riffelung 16 verfügt, um ein besseres Ausbrechergebnis zu erzielen. Ausserdem ist eine Schulter 17 gezeigt. Diese Schulter 17 kann verschiedene Aufgaben erfüllen. Vorteilhaft ist die Schulter zum Einen beispielsweise, um den Ausbrechflachstreifen 9/11 besser durch die Vorrichtung 1 greifen zu können. Ein anderer Vorteil ergibt sich darin, dass ein zu tiefes Einbringen des Ausbrechflachstreifens 9/11 in die Ausbrechplatte 4 verhindert wird. Dies wird dadurch erreicht, dass die der Riffelung 16 abgewandte Seite der Schulter 17 wie ein Anschlag wirkt. Daneben sollen aber auch Ausbrechflachstreifen als Ausführungsbeispiele abgedeckt sein, welche keinen solchen Anschlag haben. In diesem Zusammenhang kann die Eindringtiefe der Ausbrechflachstreifen auch über den Verfahrweg des Antriebs der Vorrichtung bestimmt werden. Damit ist es auch möglich Ausbrechflachstifte in unterschiedlicher Tiefe zu setzen, was einer modernen Ausbrechtechnik gerecht wird. Ein weiteres Einbringen mit der Schulter 17 in die Ausbrechplatte bedürfte einer größeren Kraft, welche in der Weise vorprogrammiert werden kann, dass die Vorrichtung 1 nur genau so viel Kraft zur Einbringung aufbringt, wie es nicht ausreicht, um den Widerstand der Schulter 17 beim Einbringprozess zu überwinden.

Ausserdem weist der Ausbrechflachstreifen 9/11 zwei Einbuchtungen 18.1 und 18.2 auf. Diese Einbuchtungen 18.1 und 18.2 dienen dazu, dass nach dem Einbringen des Ausbrechflachstreifens 9/11 in die Ausbrechplatte 4, sich die Ausbrechplatte 4 wieder entspannt und in diese Einbuchtungen 18.1 und 18.2 eingreift und verhindert, dass der Ausbrechflachstreifen 9/11 wieder aus der Ausbrechplatte 4 herausgleitet oder einen nicht ausreichend festen Sitz aufweist, um als Teil des Ausbrechwerkzeugs zu dienen. Andere Ausführungsbeispiele können mindestens eine Einbuchtung aufweisen.

Zuletzt weist der Ausbrechflachstreifen 9/11 eine Schneide 19 auf. Diese Schneide 19 dient als Abschluss des Ausbrechflachstreifens 9/11. Die Schneide 19 ist ähnlich einer Schneide eines Messers angeschliffen und erleichtert dem Ausbrechflachstreifen 9/11 das Eindringen in die Ausbrechplatte 4.

Weiter wird auf die Figur 3 hingewiesen. Dort ist in gleicher Wiese die Ausbrechspitze 15, die Riffelung 16 , die Schulter 17 und die Ausbuchtungen 18.1 und 18.2 gezeigt. Da es sich bei diesen Merkmalen, um die identischen Merkmale, wie in der Figur 2 handelt, wird lediglich auf die Ausführungen zur Figur 2 verwiesen. Ergänzend ist in der Figur 3 allerdings keine Schneide 19, sonder eine Spitze 20 gezeigt, welche eine andere Möglichkeit der einfacheren Einbringung des Ausbrechflachstreifens 9/11 in die Ausbrechplatte 4 ermöglichen soll.

Der Ausbrechstift 12/13 aus Figur 4 ist zylindrisch gestaltet. Auch dort ist eine kronenförmige Riffelung 21, eine Ausbrechspitze 22 und eine Schulter 23 gezeigt, wobei die Schulter 23 des Ausbrechstiftes 12/13 nicht als Anschlag dient. Vielmehr wird die Schulter 23 des Ausbrechstiftes 12/13 teilweise in die Ausbrechplatte 4 eingebracht.

In die Schulter 23 ist eine umlaufende Kerbe 24 eingebracht. Diese Kerbe 24 dient der Aufnahme der sich entspannenden Ausbrechplatte 4 nach dem Einbringen des Ausbrechstiftes 12/13 in die Ausbrechplatte 4. Ausserdem ist ein Abschluss 25 gezeigt, welche sich verjüngend weg von der Riffelung 23 verläuft. An den Endpunkten der Verjüngung kann der Abschluss 25 auch ähnlich einer Schneide ausgebildet sein. Zuletzt ist eine Ausnehmung 26 im Inneren des Ausbrechstiftes 12/13 vorhanden. Diese Ausnehmung 26 ist gestrichelt dargestellt, da sie sich im Inneren des Ausbrechstiftes 12/13 befindet.

Diese Ausnehmung 26 hat wiederum verschiedene Vorteile. Zum Einen muss beim Einbringen des Ausbrechstiftes 12/13 in die Ausbrechplatte 4 nicht mehr Substanz der Ausbrechplatte 4 verdrängt werden, als unbedingt notwendig und zum Anderen verstärkt die Aufnahme der Substanz der Ausbrechplatte in die Ausnehmung 26 die Stabilität des späteren Sitzes des Ausbrechstiftes 12/13 in der Ausbrechplatte 4.

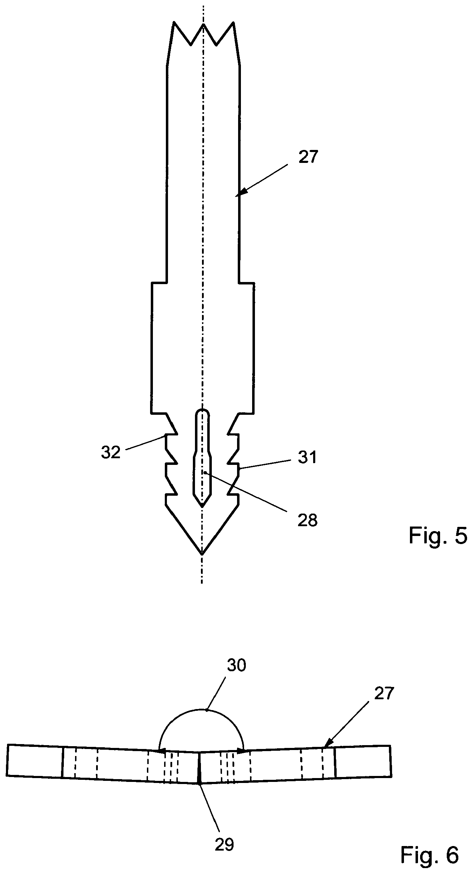

In Figur 5 ist eine Seitenansicht eines weiteren Ausführungsbeispiels eines Ausbrechflachstreifens 27 gezeigt. Dort ist in einem Fussbereich 31 eine Öffnung 28 eingelassen. Diese Öffnung 28 soll nach dem Einbringen in die Ausbrechplatte 4 der Aufnahme von sich zurückdehnendem Material der Ausbrechplatte 4 dienen. Somit wird eine bessere Fixierung des Ausbrechflachstreifens 27 erreicht. Neben der Öffnung 28 weist der Fussbereich 31 eine Zackenstruktur 32 auf. Ansonsten ist eine nicht näher bezeichnete Schulter und eine nicht näher bezeichnete Ausbrechspitze gezeigt.

Figur 6 zeigt eine Draufsicht auf den Ausbrechflachstreifen 27 nach Figur 5. Hier ist gut zu erkennen, wie der Ausbrechflachstreifen 27 in der Längserstreckung in etwa mittig einen Knick 29 aufweist und einen Winkel 30.

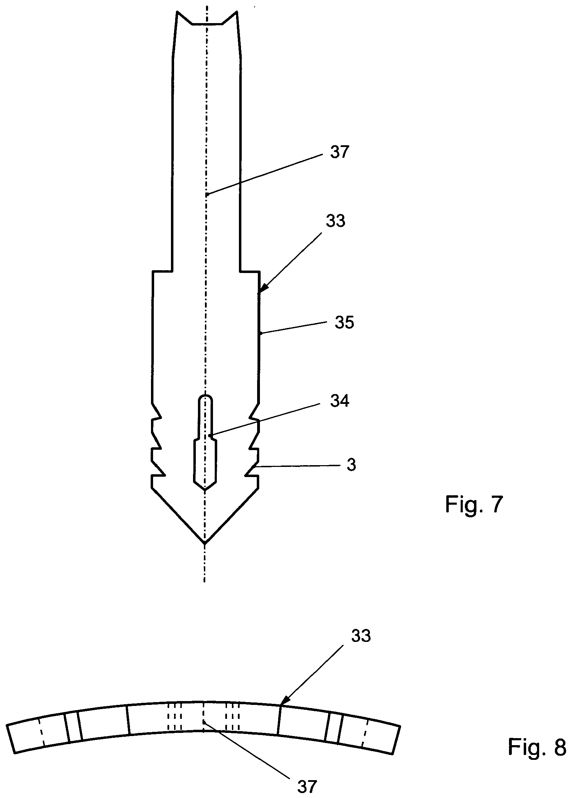

In Figur 7 ist eine Seitenansicht eines weiteren Ausführungsbeispiels eines Ausbrechflachstreifens 33 gezeigt. Der Ausbrechflachstreifen 33 weist neben einer weiteren Öffnung 34 in einer weiteren Schulter 35, welche eine Zackenstruktur 36 aufweist eine Wölbung 37 auf. Diese Wölbung 37 ist in Figur 8 gut zu erkennen, welche eine Draufsicht auf den Ausbrechflachstreifen 33 aufzeigt.

Bei der in den Figuren 7 und 8 gezeigten Wölbung 37 handelt es sich lediglich um ein Ausführungsbeispiel von anderen. Es ist genauso denkbar, dass ein Ausbrechflachstreifen eine Mehrzahl von Wölbungen aufweist. In gleicher Weise kann ein Ausbrechflachstreifen eine Mehrzahl von Knicken aufweisen. Zuletzt ist es auch denkbar, dass eine Kombination einzelner oder mehrerer Knicke und Wölbungen in einen Ausbrechflachstreifen eingeformt ist.

**BEZUGSZEICHENLISTE**

| | | | |
|---|---|---|---|
| 1 | Vorrichtung | 27 | Ausbrechflachstreifen |
| 2 | Steuereinheit | 28 | Öffnung |
| 3 | Aufnahme | 29 | Knick |
| 4 | Ausbrechplatte | 30 | Winkel |
| 5 | Ausbrechflachstreifeneinbringeinrichtung | 31 | Fussbereich |
| 6 | Ausbrechstifteinbringeinrichtung | 32 | Zackenstruktur |
| 7 | Linie | 33 | Ausbrechflachstreifen |
| 8 | Linie | 34 | Öffnung |
| 9 | Ausbrechflachstreifen | 35 | Schulter |
| 10 | Schlitz | 36 | Zackenstruktur |
| 11 | Ausbrechflachstreifen | 37 | Wölbung |
| 12 | Ausbrechstift | | |
| 13 | Ausbrechstift | | |
| 14 | Oberfläche | | |
| 15 | Ausbrechspitze | | |
| 16 | Riffelung | | |
| 17 | Schulter | | |
| 18 | Ausbuchtung | | |
| 19 | Schneide | | |
| 20 | Spitze | | |
| 21 | Riffelung | | |
| 22 | Ausbrechspitze | | |
| 23 | Schulter | | |
| 24 | Kerbe | | |
| 25 | Abschluss | | |
| 26 | Ausnehmung | | |

## Patentansprüche

1. Verfahren zur Herstellung eines Ausbrechwerkzeugs, **gekennzeichnet durch** die Schritte:
a) automatisiertes Setzen eines Ausbrechflachstreifens (9) in bereits vorhandene Schlitze (10) einer Ausbrechplatte (4) und wobei die Position, Art und Länge der bereits vorhandenen Schlitze (10) in die die Ausbrechflachstreifen (9) automatisch eingebracht werden durch eine Detektionseinrichtung erfasst, lokalisiert und an eine Steuereinheit (2) übermittelt werden und/oder durch ein CAD-Programm und/oder ein CAD-Modell zur Auslesung durch die Steuereinheit (2) bereitgestellt werden.
b) automatisiertes Setzen eines Ausbrechstifts (12) in die Ausbrechplatte (4), wobei die Ausbrechstifte (12) direkt in das Material bzw. eine Oberfläche (14) der Ausbrechplatte (4) eingetrieben werden, wobei die Position durch ein CAD-Programm und/oder ein CAD-Modell zur Auslesung durch die Steuereinheit (2) bereitgestellt werden.

2. Vorrichtung (1) zum Durchführen des Verfahrens nach Anspruch 1 zum Herstellen eines Ausbrechwerkzeugs mit einer Steuereinheit (2) eingerichtet zur Durchführung der Verfahrensschritte von Anspruch 1 und einer Aufnahme (3) für eine Ausbrechplatte (4)
**gekennzeichnet durch**
eine Ausbrechflachstreifeneinbringeinrichtung (5) für einen Ausbrechflachstreifen (9) und eine Ausbrechstifteinbringeinrichtung (6) für einen Ausbrechstift (12), wobei der Ausbrechflachstreifen (9) mit einem streifenförmigen Querschnitt und der Ausbrechstift (12) mit einem kreisförmigen Querschnitt in die Ausbrechplatte (4) einbringbar sind, wobei die Position, Art und Länge der bereits vorhandenen Schlitze (10) in der Ausbrechplatte (4) in die die Ausbrechflachstreifen (9) automatisch eingebracht werden und durch eine Detektionseinrichtung erfassbar, lokalisierbar und an die Steuereinheit (2) übermittelbar sind und/oder durch ein CAD-Programm und/oder ein CAD-Modell zur Auslesung durch die Steuereinheit (2) bereitstellbar sind, wobei das Setzen eines Ausbrechstifts (12) in die Ausbrechplatte (4), also dass die Ausbrechstifte (12) direkt in das Material bzw. eine Oberfläche (14) der Ausbrechplatte (4) eingetrieben werden, automatisiert ist, wobei die Position der zu setzenden Ausbrechstifte (12) durch ein CAD-Programm und/oder ein CAD-Modell zur Auslesung durch die Steuereinheit (2) bereitgestellt wird.

3. Vorrichtung nach Anspruch 2, **dadurch gekennzeichnet, dass** die Ausbrechflachstreifeneinbringeinrichtung (5) geeignet ist, einen Ausbrechflachstreifen (9) in einen bereits in die Ausbrechplatte (4) eingebrachten Schlitz (10) einzusetzen.

4. Vorrichtung nach Anspruch 2 oder 3, **dadurch gekennzeichnet, dass** die Ausbrechflachstreifeneinbringeinrichtung (5) geeignet ist, einen Ausbrechflachstreifen (9) aus einem Magazin zu entnehmen.

5. Vorrichtung nach einem der Ansprüche 2 bis 4, **dadurch gekennzeichnet, dass** die Ausbrechstifteinbringeinrichtung (6) geeignet ist einen Ausbrechstift (12) aus einem Magazin zu entnehmen.

6. Vorrichtung nach einem der Ansprüche 2 bis 5, **dadurch gekennzeichnet, dass** die Steuereinheit (2) geeignet ist, die Ausbrechstifteinbringeinrichtung (6) so anzusteuern, das die Ausbrechstifte (12) nach einem vorgegebenen Plan oder Muster gesetzt werden.

7. Vorrichtung nach einem der Ansprüche 2 bis 6, **dadurch gekennzeichnet, dass** die Steuereinheit (2) geeignet ist, die Aufnahme (3) mit der Ausbrechplatte (4) derart zu der Ausbrechstifteinbringeinrichtung (6) zu verschieben, dass die Ausbrechstifte (12) nach einem vorgegebenen Plan oder Muster gesetzt werden.

## Claims

1. A method for producing a stripping tool, **characterised by** the steps:
a) automated placing of a stripper flat strip (9) in slots (10) which are already present in a stripper plate (4) and wherein the position, type and length of the already present slots (10) into which the stripper flat strips (9) are automatically inserted are detected, localized and transmitted to a control unit (2) by a detection device and/or provided by a CAD program and/or a CAD model for readout by the control unit (2),
b) automated placing of a stripper pin (12) into the stripper plate (4), wherein the stripper pins (12) are driven directly into the material or a surface (14) of the stripper plate (4), wherein the position is provided by a CAD program and/or a CAD model for readout by the control unit (2).

2. A device (1) for carrying out the method according to Claim 1 for producing a stripping tool having a control unit (2) designed for carrying out the method steps of Claim 1 and a receiving means (3) for a stripper plate (4),
**characterised by**
a stripper flat-strip insertion device (5) for a stripper flat strip (9) and a stripper pin insertion device (6) for a stripper pin (12), wherein the stripper flat strip (9) having a strip-shaped cross-section and the stripper pin (12) having a circular cross-section may be inserted into the stripper plate (4), wherein the position, type and length of the already present slots (10) in the stripper plate (4) into which the stripper flat strips (9) are automatically inserted and may be detected, localized and transmitted to the control unit (2) by a detection device and/or provided by a CAD program and/or a CAD model for readout by the control unit (2), wherein the placing of a stripper pin (12) into the stripper plate (4), i.e. by driving the stripper pins (12) directly into the material or a surface (14) of the stripper plate (4), is automated,
wherein the position of the stripper pins (12) to be placed is provided by a CAD program and/or a CAD model for readout by the control unit (2).

3. The device according to Claim 2, **characterized in that** the stripper flat-strip insertion device (5) is suitable for introducing a stripper flat strip (9) into a slot (10) which is already incorporated in the stripper plate (4).

4. The device according to Claim 2 or 3, **characterized in that** the stripper flat-strip insertion device (5) is suitable for removing a stripper flat strip (9) from a magazine.

5. The device according to one of Claims 2 to 4, **characterized in that** the stripper pin insertion device (6) is suitable for removing a stripper pin (12) from a magazine.

6. The device according to one of Claims 2 to 5, **characterized in that** the control unit (2) is suitable for controlling the stripper-pin insertion device (6) such that the stripper pins (12) are placed according to a predetermined plan or pattern.

7. The device according to one of Claims 2 to 6, **characterized in that** the control unit (2) is suitable for displacing the receiving means (3) with the stripper plate (4) with respect to the stripper-pin insertion device (6) in such a way that the stripper pins (12) are placed according to a predetermined plan or pattern.

## Revendications

1. Procédé de fabrication d'un outil d'éjection, **caractérisé par** les étapes consistant à:
a) mettre en place de manière automatique une bande d'éjection plate dans des fentes déjà existantes (10) d'une plaque d'éjection (4) et où la position, le type et la longueur des fentes existantes (10) sont introduits automatiquement dans la bande d'éjection plate (9), détectés et localisés par un dispositif de détection et transmis à une unité de commande (2) et/ou fournis par un programme de CAO et/ou un modèle de CAO pour lecture par l'unité de commande (2),
b) mettre en place de manière automatique une goupille d'éjection (12) dans la plaque d'éjection (4), où les goupilles d'éjection (12) sont enfoncées directement dans le matériau ou une surface (14) de la plaque d'éjection (4), où la position est fournie par un programme de CAO et/ou un modèle de CAO pour lecture par l'unité de commande (2).

2. Dispositif (1) pour la mise en oeuvre du procédé selon la revendication 1 pour la fabrication d'un outil d'éjection avec une unité de commande (2) réalisé pour effectuer les étapes de procédé selon la revendication 1 et un moyen de réception (3) d'une plaque d'éjection (4),
**caractérisé par**
un dispositif d'introduction (5) d'une bande d'éjection plate (9) et un dispositif d'introduction (6) d'une goupille d'éjection (12), où la bande d'éjection plate (9) de section en forme de bande et la goupille d'éjection (12) de section circulaire peuvent être introduites dans la plaque d'éjection (4), la position, le type et la longueur des fentes déjà existantes (10) dans la plaque d'éjection (4) sont introduits automatiquement dans la bande d'éjection plate (9) et peuvent être détectés et localisés par un moyen de détection et transmis à l'unité de commande (2) et/ou mis à disposition par un programme de CAO et/ou un modèle de CAO pour lecture par l'unité de commande (2), où la mise en place d'une goupille d'éjection (12) dans la plaque d'éjection (4), donc que les goupilles d'éjection (12) sont enfoncées directement dans le matériau ou une surface (14) de la plaque d'éjection (4), est automatisée, où la position des goupilles d'éjection (12) à mettre en place est mise à disposition par un programme de CAO et/ou un modèle de CAO pour lecture par l'unité de commande (2).

3. Dispositif selon la revendication 2, **caractérisé par le fait que** le dispositif d'introduction de bande d'éjection plate (5) convient pour placer une bande d'éjection plate (9) dans une fente (10) déjà réalisée dans la plaque d'éjection (4).

4. Dispositif selon la revendication 2 ou 3, **caractérisé par le fait que** le dispositif d'introduction de bande d'éjection plate (5) convient pour retirer une bande d'éjection plate (9) d'un magasin.

5. Dispositif selon l'une des revendications 2 à 4, **caractérisé par le fait que** dispositif d'introduction de goupille d'éjection (6) convient pour retirer une goupille de dérivation (12) d'un magasin.

6. Dispositif selon l'une des revendications 2 à 5, **caractérisé par le fait que** l'unité de commande (2) convient pour commander le dispositif d'introduction de goupille d'éjection (6) de sorte que les aiguilles d'éjection (12) soient mises en place selon un plan ou modèle préétabli.

7. Dispositif selon l'une des revendications 2 à 6, **caractérisé par le fait que** l'unité de commande (2) convient pour déplacer le moyen de réception (3) avec la plaque d'éjection (4) par rapport au dispositif d'introduction de goupille d'éjection (6) de sorte que les goupilles d'éjection (12) soient mises en place selon un plan ou modèle préétabli.
